# EUROPEAN PATENT APPLICATION

(11) **EP 2 352 292 A1**
(43) Date of publication of application: **03.08.2011**
(21) Application number: 09178223.5
(22) Date of filing: 07.12.2009
(51) Int. Cl.: H04N 7/24, H04H 20/10, H04N 7/16, H04N 7/52

(54) **System for managing television channels**

(71) Applicant: Telefonaktiebolaget L M Ericsson (PUBL), 16483 Stockholm (SE)
(72) Inventor: Stallard, Paul, Chichester, Sussex PO18 8BL (GB); McEvilly, Christopher, Bagshot, Surrey GU19 5QF (GB); Bridges, Jennifer, Southampton, Hampshire SO30 4DA (GB)
(74) Representative: Chisholm, Geoffrey David

(57) **Abstract**

The invention relates to the delivery of television assets such as linear broadcast content or video on demand content through a distribution network to a number of users. The invention provides a method of delivering video-on-demand content having secondary content delivery slots, the method comprising generating (705) an inventory datastructure (500) of secondary content delivery slots within the video-on-demand content, the secondary content delivery slots associated with audience data created by estimating (710) a number of user requests for the video-on-demand content (620) which match a demographic criterion and a time period, outputting (720) the inventory datastructure, receiving (725) secondary content (607) associated with respective secondary content delivery slots, transmitting (730) the video-on-demand content (620) together with the secondary content (607) in the respective secondary content delivery slots in response to receiving a user request matching the demographic criterion and the time period.

## Description

### Technical Field

The invention relates to the delivery of television assets such as linear broadcast content or video on demand content through a distribution network to a number of users.

### Background

Much of the television (TV) industry is supported by advertising revenue. Linear TV broadcast providers such as cable and satellite companies generate a content stream including programming and advertising content which is then broadcast to users. The timing of the content to be broadcast is determined in advance so that advertising slots within the broadcast can be sold to advertising companies. Advertising content is then spliced into the content stream and broadcast to all users. However linear advertisement revenue is declining due to growth in web advertising and the increasing popularity of video on demand (VOD) delivery. Linear broadcast TV advertising is also expensive given that the advertising content broadcast to all users may only be relevant to a subset of those users.

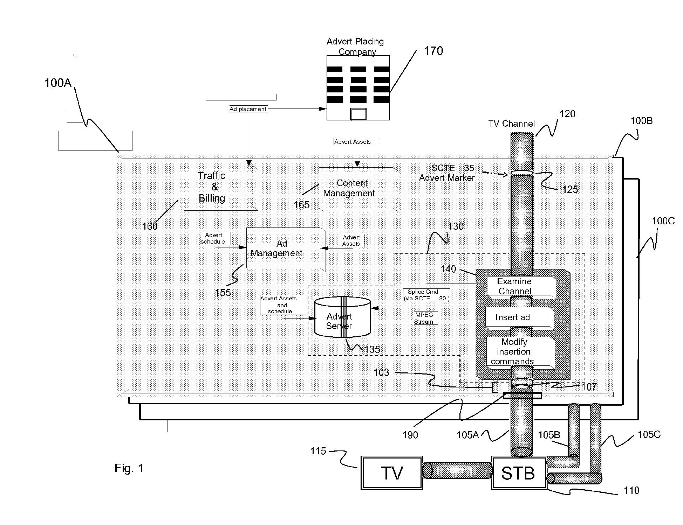

Figure 1 shows a typical linear TV broadcasting system. The cable or satellite TV provider may broadcast a number of channels 105A-C each delivering programming and advertising content to a number of users. Each channel is provided by a TV asset delivery system 100A-C to a user device 110 such as a set top box which selects one of the channels 105A-C to decode and generate an audio visual signal for display on a users television display device 115. The channels 105A-C are broadcast over a distribution network such as a radio frequency cable network and/or optical fibre network to a user's home. A satellite based distribution network could alternatively be used. Linear broadcast content 120 is generated in advance and streamed to the respective TV asset delivery system 100A where it is fed into a splicing unit 140. The linear broadcast content stream 120 includes time slots 125 at predetermined times which allow for the insertion of secondary content such as advertising material. Information about the timing of the programming content in the linear broadcast content stream 120 is included in a traffic and billing system 160, together with timing information on the slots 125 in the content stream 120. The traffic and billing system 160 offers these time slots to advertising providers 170. When such a time slot is bought, the advertising provider forwards the advertising content to a content management database 165, and this content is associated with the time slot in the traffic and billing system 160.

This process generates an advertising schedule stored in the traffic and billing system 160 which associates a number of future time slots 125 with advertising or secondary content in the content management database 165. Before the programming content is delivered in the linear broadcast content stream 120, the advertising content together with insertion timing information is forwarded to an ad management system 155 which controls an advert server 135 to prepare advertising content associated with up coming time slots 125 for insertion into the linear broadcast content stream 120. The splicing unit 140 recognizes the time slots 125 and signals their presence to the advert server 135 which generates an appropriate content stream associated with the advertising material to be inserted into the time slot 125. The splicing unit 140 then inserts the advertising content into the broadcast stream to generate delivery content 103 for the linear broadcast channel 105A. The delivery content 103 comprises both the programming content and the advertising content 107. The delivery content is then transmitted by a transmitter 190 over the linear broadcast channel 105A to the user's set top box 110. A similar system and process is used for the other channels 105B and 105C using their respective TV asset delivery systems 100B and 100C.

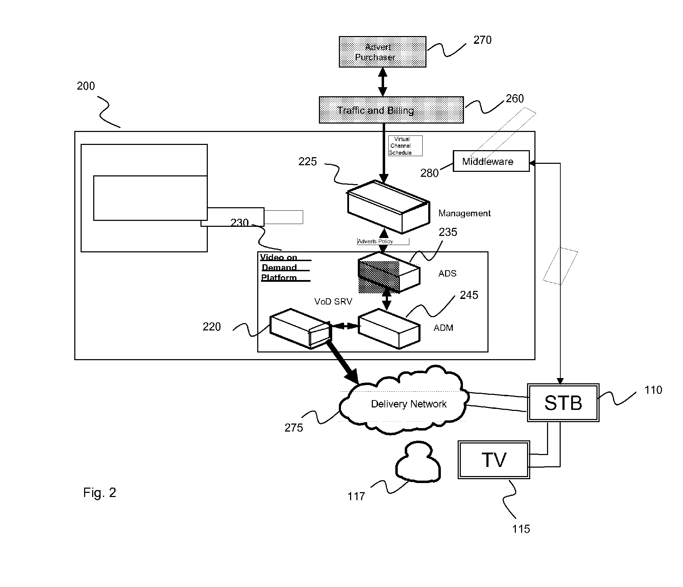

A typical video on demand (VOD) delivery system is shown in figure 2. A TV asset delivery system 200 comprises a video on demand platform 230 which generates delivery content for forwarding to a user 117. The video on demand platform 230 comprises a video on demand server 220 which stores programming content and delivers this when requested by an ad management service (ADM) 245 which implements placement or insertion of advertising content into slots in the programming content. The combined or delivery content is forwarded by the server for transmission to the user over a distribution network 275. The advertising content inserted in to the programming content from the VOD server is controlled by an advert decision system (ADS) 235 which selects the advertising content to be inserted into the programming or video on demand content. The ADM queries the ADS at session setup time on what ads to place. Typically the ads are based on the type of video on demand content, so that all users requesting this video on demand content see the same advertising material. An ad management system 255 forwards the advertising material and timing information to the advert decision system 235. As with the linear broadcasting system of figure 1, a traffic and billing function 260 is used to sell advertising slots to advertising providers 270. The delivery content is transmitted over a distribution network 275 to a user's set top box 110 for decoding and display on a user's TV display device 115. The process of requesting video on demand content is controlled by a signaling interchange between the set top box 110 and middleware 280 in the TV asset delivery system 200.

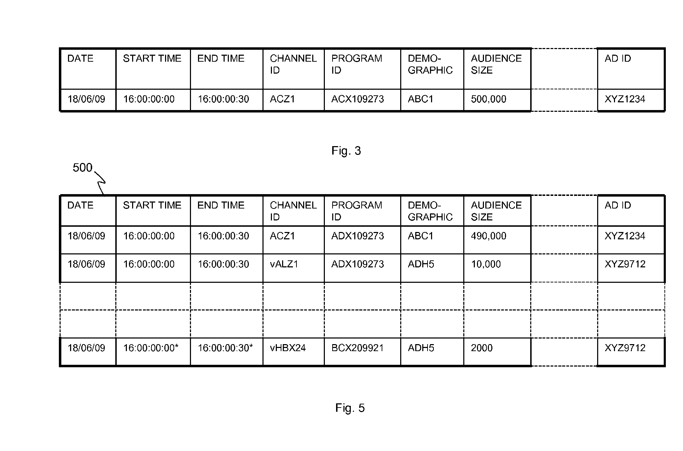

Figure 3 shows a notional datastructure which may be used by a traffic and billing database and which stores information about the time slots used for inserting advertising content in the linear broadcast content. Each predetermined time slot is associated with a date, start and end times, a channel identifier, a program identifier, a demographic criterion, and an estimated audience size. The demographic criterion is typically related to the time of day, the channel, and the programming content; so for example an evening action movie may be associated with males aged 16-30. The traffic and billing database presents some or all of this information relating to available ad slots to advertisers in a known predetermined format. Once the time slot is sold, it is associated with an advert identifier.

### Summary of the Invention

In one aspect there is provided a method of delivering video-on-demand content having secondary content delivery slots such as ad slots. The method comprises generating an inventory datastructure of secondary content delivery slots within the video-on-demand content. The secondary content delivery slots are associated with audience data created by estimating a number of user requests for the video-on-demand content which match a demographic criterion and a time period. For example demographic criteria might include gender=male and age=18-26, whilst the time period might be 6-8pm. The method outputs the inventory datastructure, for example to a traffic and billing interface which presents some of this information to third party secondary content providers ― for example advertisers. The method receives secondary content associated with respective secondary content delivery slots and also user requests. The video-on-demand content is transmitted together with the secondary content in the respective secondary content delivery slots in response to receiving a user request matching the demographic criterion and the time period.

In an embodiment, this delivery method allows ad slots in VOD content to be presented to advertisers as a virtual channel having an estimated audience so that ads can be sold against the virtual channel. This also allows ads to be targeted at particular demographic groups of VOD users.

In a second aspect there is proved a method of delivering linear broadcasting TV content having secondary content delivery slots, for example ad slots. The method comprises estimating a number of users of first linear broadcasting TV content which match a demographic criterion in order to generate audience data for a secondary content delivery slot within the first linear broadcasting TV content. The method also comprises estimating a number of users of second linear broadcasting TV content which match the same demographic criterion in order to generate audience data for a secondary content delivery slot within the second linear broadcasting TV content. The audience data for the secondary content delivery slots for the first and second linear broadcast TV content are then aggregated and output. The method receives secondary content associated with the secondary content delivery slots. The secondary content is spliced into the secondary content delivery slot within the first linear broadcasting TV content and transmitted to the users of the first linear broadcasting TV content. The secondary content is also spliced into the secondary content delivery slot within the second linear broadcasting TV content and transmitted to the users of the second linear broadcasting TV content.

In an embodiment this method allows the audience for two or more channels having demographically similar audiences to be combined and the ad slots sold as combined ad slots. In this way, the audience size for the ads can be increased by effectively combining the two (or more) channels into a single virtual channel. As a further alternative, ad slots for parts of the channels may be combined, for example 3-6pm on channel A and 5-8pm on channel B.

In a third aspect there is provided a method of delivering linear broadcasting TV content having secondary content delivery slots, for example ad slots. The method comprises estimating a number of users of linear broadcasting TV content which match a first demographic criterion in order to generate audience data for a secondary content delivery slot within the first linear broadcasting TV content. The method also comprises estimating a number of users of the linear broadcasting TV content which match a second demographic criterion in order to generate audience data for a secondary content delivery slot within the linear broadcasting TV content. The audience data for the secondary content delivery slot for the linear broadcast TV content is then output as two delivery slots associated with different demographic criteria. The method receives two secondary content associated with the delivery slot. The linear broadcast TV content is replicated and one of the secondary content is spliced into the secondary content delivery slot within the first part of the linear broadcasting TV content and transmitted to the users of the linear broadcasting TV content who match the corresponding demographic criteria. The other secondary content is spliced into the secondary content delivery slot within the replicated part of the linear broadcasting TV content and transmitted to the users of the linear broadcasting TV content who match the other demographic criteria. The split or two secondary content delivery slots can then be presented to secondary content providers as unrelated slots for respective audience demographics and against which the providers can provide different secondary content.

In an embodiment this method allows targeting of ads to demographic subgroups of the linear broadcast TV content channel.

There is also provided apparatus suitable for implementing the above methods, a user device such as a set-top box suitable for use with these methods, and computer software for implementing these methods or a part thereof.

### Brief Description of the Drawings

Embodiments will now be described with reference to the following drawings, by way of example only and without intending to be limiting, in which:
Figure 1 shows a linear broadcast TV delivery system;
Figure 2 shows a video on demand delivery system;
Figure 3 shows a notional traffic and billing table entry for an advertising time slot;
Figure 4 shows a linear broadcast content delivery system according to an embodiment;
Figure 5 shows notional entries in an inventory database for time slots according to embodiments;
Figure 6 shows a video on demand (VOD) delivery system according to another embodiment;
Figure 7 is a flow chart showing a method of delivering VOD content according to an embodiment;
Figure 8 is a schematic of a user device according to an embodiment;
Figure 9 shows a linear broadcast content delivery system according to a further embodiment;
Figure 10 illustrates the generation of virtual channels according to an embodiment; and
Figure 11 is a flow chart showing a method of delivering linear broadcast content according to an embodiment.

### Detailed Description

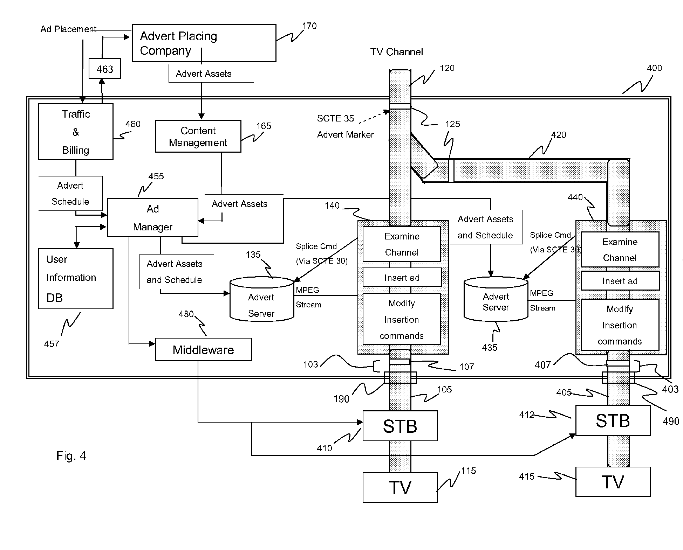

Figure 4 illustrates a linear broadcast content television (TV) asset delivery system for delivering a TV asset to users of a distribution network according to an embodiment. In this embodiment, the TV asset comprises linear broadcast TV content 120 which is broadcast over a plurality of linear broadcast channels 105, 405 which form part of the distribution network. The delivery system 400 is similar to the system of figure 1 in receiving a linear broadcast content stream 120 and splicing advertising or other secondary content into this stream to generate delivery content 103, 403. The system 400 comprises a delivery content splicing unit 140, an advert server 135 and a content management database 165 for storing the advertising or other secondary content. Operation of these components is the same as described with respect to figure 1.

In addition, the delivery system 400 comprises a modified ad manager system or system controller 455, a modified traffic and billing system 460, a user database 457, a second advert server 435 and a second delivery content splicing unit 440. The system 400 also comprises middleware 480 which interfaces with modified user devices 410, 412 or set top boxes which select one broadcast channel and deliver corresponding audio visual signals to a user's television display device 115 or 415. The incoming linear broadcast content stream 120 is split or replicated with one stream fed to the first delivery content splicing unit 140 and the other stream fed to the second delivery content splicing unit 440. This allows different advertising or other secondary content to the spliced into the respective linear broadcast content streams 120 in order to generate different delivery contents 103 and 403 in which the primary or programming content is the same but the secondary or advertising content 107, 407 is different.

This architecture allows a demographic sub group of the main channel 105 to be separately targeted with different secondary contents such as advertising material. Whilst only two delivery content splicing units 140 and 440 and respective linear broadcast channels 105 and 405 are shown, in principle the main channel 105 could be split into any number of demographic sub groups, with different respective secondary content 407. Users belonging to a particular demographic group are identified and their user device 412 is arranged to automatically switch to the corresponding channel 405 instead of the main channel 105. In this way the user receives the targeted secondary content 407. The set top box 412 is controlled in this way by middleware 480 in the delivery system 400 which signals the set top box 412 using known signalling mechanisms.

The system controller or ad manager 455 is arranged to identify a number of users matching a demographic criterion such as male aged 16-30. Information including demographic data for each user or subscriber of the delivery system 400 is stored in the user database 457. The identified users can be grouped or mapped into a virtual channel corresponding to the additional broadcast channel 405 which comprises the same programming content but different secondary content 407 compared with the main channel 105. The time slots 125 associated with this additional channel 405 can be represented in an inventory datastructure 500 as different time slots from those associated with the main channel 105 as illustrated in figure 5.

This inventory datastructure 500 is representational only and merely indicates logical associations between time slots and secondary content such as advertisements. When compared with the datastructure of figure 3, the first entry in the table of figure 5 has the same parameters except for audience size. The same time slot but for the additional channel 405 is represented as a virtual channel (vALZ1) by the second entry which has the same date (18/06/09), start (16:00:00:00) and end (16:00:00:30) times, and program identifier (ADX109273). However the virtual channel entry has a different channel identifier (vALZ1 corresponds to channel 405), a different demographic identifier (ADH5) and an estimate audience size (10,000) which has been deducted from the audience size of the main channel. A different advertising identifier (XYZ9712) is also associated with the virtual channel indicating that different secondary content will be broadcast at the same time on the additional channel 405 compared with the secondary content (XYZ1234) broadcast on the main channel 105. Various methods are known to estimate audience size based on channel type, program content and user demographic information, and therefore such methods are not further described here. However, it can be seen that an additional and more targeted advertising opportunity has been created with the use of this virtual channel. In this particular example, one advertising slot for an estimated audience size of 490,000 having a demographic profile (ABC1) based on the channel and program as well as a second advertising slot associated with an estimated audience size of 10,000 and having a more focussed demographic profile ― here indicated by ADH5. The information in the inventory datastructure is used by the traffic and billing database to present information about the ad slots to advertisers in a predetermined known format. Therefore there is no need to modify the traffic and billing database or the format in which ad slots are sold.

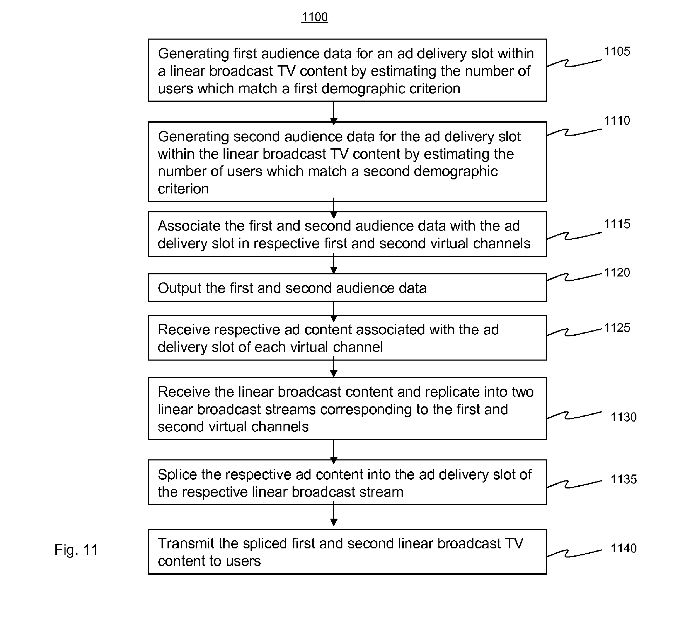

Figure 11 shows a method of delivering linear broadcast TV content to users of a distribution network which may be implemented by the ad manager 455 of the TV asset delivery system 400 of figure 4. The method 1100 initially comprises at step 1105, estimating a number of users or viewers of the linear broadcast TV content which match a demographic criterion in order to generate audience data for a time slot within the content. Estimating the number of viewers of a TV program is a widely available service within the TV advertising industry. This estimate of channel viewers is also typically accompanied a breakdown of by the demographic criteria of the audience which may include geographical location, viewer age, likely content preference (such as action movies) and gender. Such a service is provided by the Broadcasters Audience Research Board (BARB) in the UK. The method 1100 is therefore able to obtain an estimate of the number of users matching one or more predetermined demographic criterion such as age range (eg 18-25) and gender (eg male). For example an estimated audience of 833,332 may be broken down into the following demographic group: age=18-25 and gender=male; estimated audience=16,666. The audience data for an ad delivery slot within the linear broadcast content can then be generated using the number of users matching the demographic criterion (or criteria). Typically a simple relationship is used, such as equals; although a reduction in audience data for the ad delivery slot compared with the content may be factored in using a simple percentage. For example the first audience data may correspond to 60% of the estimated user numbers matching the criterion ― eg 16,666 x 60% = 10,000.

At step 1110, the method generates second audience data for the same ad delivery slot within the same linear broadcast content, but for users matching a different demographic criterion. The demographic criterion may simply be everyone else in the estimated number of users that is not part of the first demographic criterion; however other criteria may be used for example age=50-65 and gender=female. Following on from the above example where the estimated user numbers for the content is 833,332 and the estimated number of viewers matching the first demographic criteria is 16,666; then the rest of the users represent 816,666. The second audience data may then be calculated as 816,666 x 60% = 490,000.

In step 1115, the method associates these two generated audience data with respective virtual channels. This may be implemented by modifying and/or adding entries in an inventory datastructure, for example as illustrated in figure 3. The first entry (channel lD = ACZ1) represents a first virtual channel having audience data of 490,000 and a demographic lD (ABC1) which is a generic representation of the expected viewers of the linear broadcast content or corresponding to those viewers except those corresponding to the demographic criteria age=18-25 and gender=male. The second entry (channel ID = vALZ1) represents a second virtual channel having audience data of 10,000 and a demographic lD (ADH5) corresponding to the demographic criteria age=18-25 and gender=male.

In step 1120, the first and second audience data is output for example via a traffic and billing interface 460. In this step, audience data is linked to saleable ad delivery or time slots. Advertising placement companies 170 can then buy these slots and forward corresponding advertising material or secondary content. This ad content is received by the method at step 1125 and is associated with respective time slots. The ad content is typically stored in a content management server 165 until it is needed. The secondary content will be associated with an advertising identifier added to the appropriate virtual channel entry in the inventory datastructure of figure 5.

The method 1100 then receives linear broadcast content 120 and replicates or slits this into two linear broadcast streams 120, 420 at step 1130. These two streams correspond to the two virtual channels.

The method then splices the respective secondary content into the two linear broadcast streams 120, 420 to generate delivery content at step 1135. This may be implemented by the delivery content splicing unit 440 as previously described to generate the delivery content 103, 403 which includes the secondary content or advertising material 107, 407 targeted at users of the respective virtual channels.

The method then transmits the two delivery content streams over respective channels 105 and 405 at step 1140. This step is implemented in the system of figure 4 by the transmitters 190 and 490 which transmit the delivery content 103, 403 over the broadcast channels 105 and 405 to user devices 110 and 410. The channels 105 and 405 may be implement using radio frequency or optical distribution networks as previously described.

The user devices or set-top-boxes (STB) receive and play delivery content depending on user commands and control signals from the middleware 480. Users select a particular channel to view the linear broadcast content 120, however this selection may be overridden by the controlled STB 110, 410 depending on the demographic criterion on the user. Where a virtual channel is created for a sub-group of users matching a demographic criterion, the middleware signals all the STB associated with these users. Identification of these users can be made using the user information database 457. When the user commands a change of channel having a virtual channel targeted at a predetermined criterion which this user matches, then the STC is configured to automatically switch to the virtual channel (eg 405 instead of 105).

In this way, ad content may be targeted at users matching different demographic criteria. Therefore audience for a particular linear broadcast content which would normally be broadcast on a single channel with a single set of ad content can be split into multiple physical channels each being capable of supporting different ad content. These different ad content opportunities or secondary content delivery slots may then be sold separately.

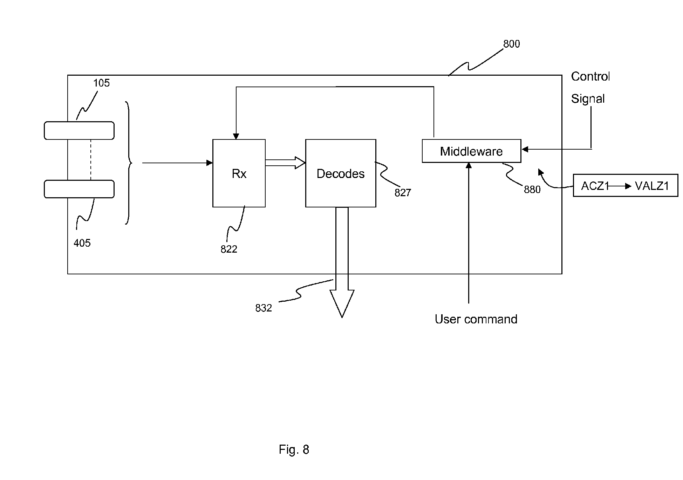

A schematic diagram of a user device 800 such as a set top box is shown in figure 8. The user device 800 receives a number of linear broadcast channels 105, 405 and comprises a receiver 822 coupled to a decoder 827 and a device controller or middleware 880. The receiver 822 selects one of the channels 105 or 405 as is known, and forwards a baseband encoded content signal to the decoder 827 which decodes the signal into an audio visual signal 832 suitable for input to a television display device. The device middleware 880 interfaces with corresponding delivery system middleware 480 on the TV asset delivery system 400, and also with user commands such as operation of a remote control device to change a channel. When the user device is associated with a virtual channel, the middleware 880 receives a control signal from the TV asset delivery system indicating a primary linear broadcast channel (ACZ1) 105 and a secondary linear broadcast channel 405 (vALZ1). The device controller or middleware 880 is arranged to switch the receiver 822 to the second linear broadcast channel 405 in response to a user command to switch to the primary linear broadcast channel 105. By this mechanism, the user still receives the programming or primary content 120 shown on the primary linear broadcast channel 105 but receives different secondary content 407. In this way, the user may receive more targeted advertising than can be achieved with known systems.

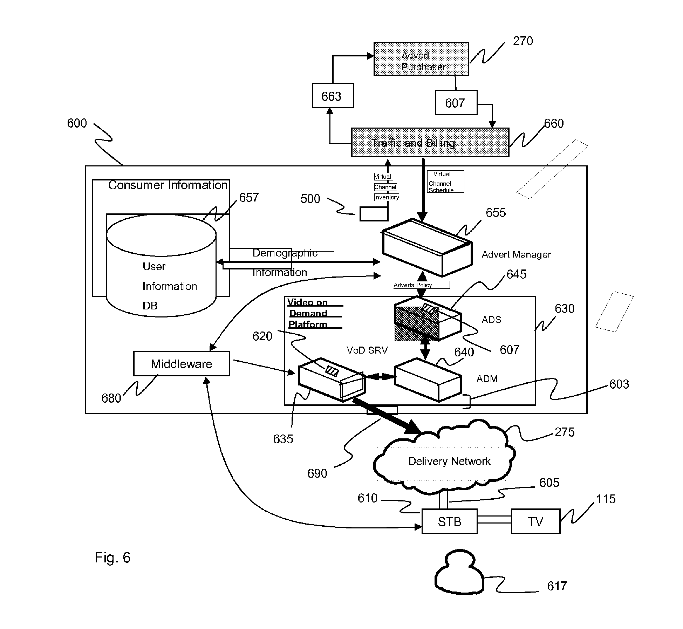

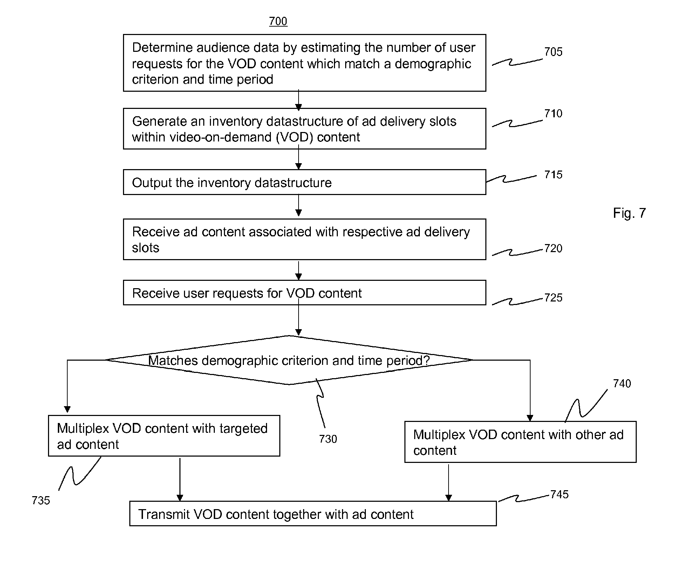

A TV delivery system according to another embodiment is shown in figure 6. This delivery system 600 delivers a number of video on demand (VOD) assets or content 620. The method of figure 7 may also be implemented by this embodiment. The delivery system 600 comprises a user database 657, a system controller or ad manager 655, a video on demand platform 630, middleware 680 and a transmitter 690. The video on demand platform 630 comprises a video on demand server 635 which stores VOD content 620 and is coupled to an advert management service (ADM) 640 which is coupled to the transmitter 690. The ADM 640 is coupled to an ad decision system (ADS) 645 which instructs the ADM on what secondary content such as advertisements 607 are to be inserted in the VOD assets. The ADS is controlled by the system controller 655. The TV asset delivery system 600 is also associated with a traffic and billing system 660 which forwards TV asset metadata 663 to third party advertisers 270 which in return provide secondary content 607 for insertion into bought time slots. This metadata 663 is typically a sub-set of the inventory datastructure 500 information about available ad slots as described in more detail below.

The ad multiplexer 640 splices the secondary content 607 into the VOD asset 620 as is known in order to generate delivery content 603 for transmission over the distribution network 275 to a user device 610. The distribution network 275 may be a cable or fibre network or an internet protocol network for example. The user device such as a set top box 610 exchanges control signals with middleware 680 in the TV asset delivery system 600 and provides an audio visual signal for presentation on a TV display device 115.

The system controller 655 estimates a number of user requests matching certain conditions and presents this estimated audience through the traffic and billing table as a virtual channel against which ad delivery slots may be sold. In the embodiment a number of user requests are estimated which match a predetermined download request window or time period and a demographic criterion. This group of user requests or audience data are mapped into a virtual channel in the inventory datastructure 500, for example as shown in the last entry of figure 5. Here the audience size is again estimated based on the expected number of users to request the VOD asset 620 over a predetermined time window such as early evening on a particular date. Time slots within the VOD asset 620 are represented in the example by notional start and end times which may be compared with notional program start and end times. However any suitable presentation of this audience data may be used. The time slots in the VOD asset can then be sold to advertisers as another virtual channel; each time slot then being associated with corresponding advertising or other secondary content.

In a further alternative, multiple estimated audiences which match the demographic criterion and which correspond to one or more VOD assets and/or one or more predetermined time windows may be combined and grouped together as a single virtual channel against which advertisers may sell ad content.

Users request VOD assets via their user device 610 which communicates with the middleware 680 in known manner. In the TV asset delivery system 600, the middleware 680 is arranged to notify the system controller 655 of VOD asset requests, and the system controller 655 is arranged to determine whether the user request matches the time period and the demographic criterion. This can be implemented using information about the user in the user database 657. If there is a match, the system controller 655 instructs the ad decision system 645 to insert the secondary content in the corresponding virtual channel. Other "non matching" user requests may have some standard secondary content inserted into the time slot available in the VOD asset 620, or they may also have targeted advertising content if they are part of a different group of identified user requests matching a different demographic criterion ― in other words a different virtual channel.

The virtual channels are based on estimates of the number of user requests. A reconciliation can be made after the predetermined time period(s) if there is a different between the estimated and actual number of downloads within the time period.

A method of delivering VOD content having ad delivery slots is shown in figure 7, and may be implemented by the delivery system 600. The method 700 initially comprises, at step 705, estimating a number of user requests or viewers of the VOD content which match a demographic criterion and a time period in order to generate audience data for a time slot within the content. Estimating the number of viewers of VOD content is a widely available service within the TV advertising industry. This estimate of VOD viewers is also typically accompanied a breakdown of by the likely download time periods, demographic criteria of the audience which may include geographical location, viewer age, likely content preference (such as action movies) and gender. Such a service is provided by BARB. The method 700 is therefore able to obtain an estimate of the number of user requests for a given time period or window in which the users match one or more predetermined demographic criterion such as age range (eg 18-25) and gender (eg male). For example an estimated VOD download audience for a late afternoon time period (eg 4-6pm; 2hour window) may be 4000. This audience estimate may include the an estimate of 2000 for the demographic group: age=18-25 and gender=male an estimate. This estimated number of user requests (2000) corresponds to a particular demographic group of users (ADH5) requesting the VOD during a predetermined time period (4-6pm).

At step 710, in the inventory datastructure 500, the audience data for an ad delivery slot within the VOD content can then be generated using this estimated number of user requests. Typically a simple relationship is used, such as equals; although a reduction in audience data for the ad delivery slot compared with the content may be factored in using a simple percentage. In the example shown in the last entry of the inventory datastructure of figure 5, the audience data for the ad delivery slot is assumed to be the same as the estimated number of user requests.

In step 715, the inventory datastructure comprising the audience data for respective ad slots is output for example to a traffic and billing interface 460. The audience data is linked to saleable ad delivery or time slots and advertising placement companies 170 can then buy these slots and forward corresponding advertising material or secondary content. The traffic and billing interface typically provides a subset of the information in the inventory datastructure to these third party advertisers in order to sell the ad slot. This arrangement means that the same sort of information typically provided to advertisers for ad slot selling in linear broadcast TV can also be provided for VOD downloads. This enables sales of VOD ad slots using existing traffic and billing interfaces and also enables more targeted ad content to be provided to users of VOD content.

Ad content linked to sold ad slots is then received by the method at step 720. The ad content is linked with particular ad slots and is typically stored in the ADS 645 or other content management server until it is needed. The secondary or ad content will be associated with an advertising identifier added to the appropriate virtual channel entry in the inventory datastructure of figure 5.

User requests for the VOD content are received at step 725. At step 730 the user requests are compared with the demographic criterion (or criteria) and the predetermined time period. If there is a match, then the targeted ad content is multiplexed into the VOD content prior to download at step 735. If there is no match, either standard ad content or ad content corresponding to another virtual channel (user demographic criterion and/or request time period) is used instead (step 740). Finally the VOD content together with the ad content is transmitted to the user's STB at step 745.

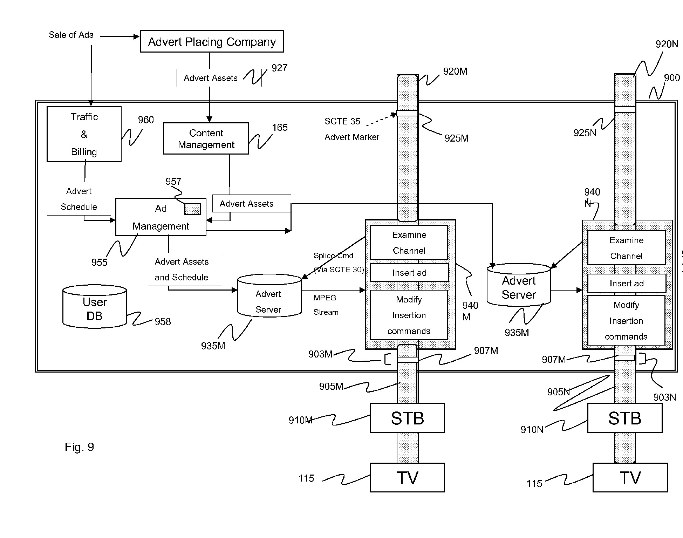

A further embodiment is shown in figure 9, many features of which are similar to the embodiment of figure 4. However this TV asset delivery system 900 receives two linear broadcast content streams 920M and 920N each with predetermined time slots 925M and 925N. However the same secondary or advertising content 907M is spliced into their outgoing delivery content streams 903M and 903N. Although the programming content of each stream 920M and 920N is different, the advertising or secondary content 907M is the same so that these combined channels can be modelled as a single virtual channel. This can be represented in the inventory datastructure 500 by a single entry for each time slot and in which the audience numbers for the two channels are combined. This may be useful for combining audience numbers for small but related channels. In this system 900, the two splicing units 940M and 940N insert the same advertising material at similarly timed slots 925M and 925N.

In a further alternative, the ad slots 925M and 925N from the two linear channels may be from different time periods, but grouped together in a virtual channel for the purpose of selling ad slots with a larger combined audience.

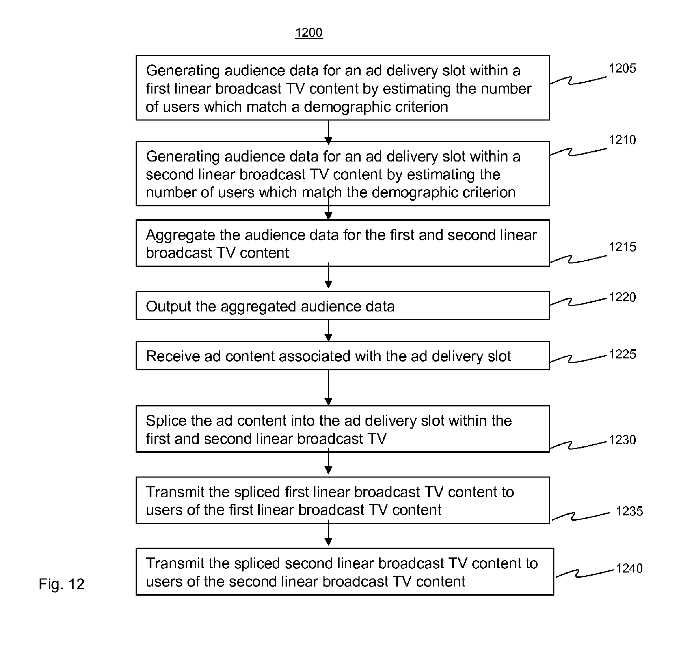

A method of delivering linear broadcast TV content having ad slots is shown in figure 12. This method may be implemented by the ad manager 955 of the TV asset delivery system 900 of figure 9. The method 1200 initially comprises at step 1205, estimating a number of users or viewers of the first linear broadcast TV content in order to generate audience data for a time slot within the content. As already discussed estimating the number of viewers of a TV program is a widely available service within the TV advertising industry. This estimate of channel viewers is also typically accompanied a breakdown of the demographic criteria of the audience which may include geographical location, viewer age, likely content preference (such as action movies) and gender. The method 1200 is therefore able to obtain an estimate of the number of users matching one or more predetermined demographic criterion such as age range (eg 18-25) and gender (eg male). For example an estimated audience of 100,000 may be broken down into the following demographic group: age=18-25 and gender=male; estimated audience=80,000. The audience data for an ad delivery slot within the linear broadcast content can then be generated using the number of users matching the demographic criterion (or criteria). Typically a simple relationship is used, such as equals; although a reduction in audience data for the ad delivery slot compared with the content may be factored in using a simple percentage.

At step 1210, the method generates second audience data for an ad delivery slot within a second linear broadcast content. The two broadcast channels will typically be demographically similar, for example having the same user profile or predominant demographic group. A similar mechanism is used to generate the audience data from the estimated number of users or viewers of the second broadcast TV content.

In step 1215, the method aggregates these two generated audience data into a combined virtual channel. This may be implemented by combining two entries in the inventory datastructure 500, for example adding the audience data numbers together. Alternatively two entries may be logically linked.

In step 1220, the aggregated audience data is output for example via a traffic and billing interface 460. In this step, the aggregated audience data is linked to saleable ad delivery or time slots. Advertising placement companies 170 can then buy these slots and forward corresponding advertising material or secondary content. This ad content is received by the method at step 1225 and is associated with respective time slots of each linear broadcast content. The ad content is typically stored in a content management server 165 until it is needed. The secondary content will be associated with an advertising identifier added to the appropriate virtual channel entry in the inventory datastructure of figure 5. The method 1200 then receives the first and second linear broadcast contents 920M and 920N at step 1130. These two streams correspond to the combined single virtual channel.

The method then splices the respective secondary content into the two linear broadcast streams 920M, 920N to generate delivery content at step 1235. This may be implemented by the respective delivery content splicing units 940M and 940N as previously described to generate the delivery content 903M, 903N. The delivery content includes the same ad content but different linear broadcast content which includes the secondary content or advertising material 107, 407 targeted at users of the respective virtual channels.

The method then transmits the two delivery content streams over respective channels 905M and 905N to respective users at step 1140. This step is implemented in the system of figure 9 by the transmitters (not shown) similar to transmitter 190 and 490 of figure 4. The respective user devices or set-top-boxes (STB) 910M and 910N receive and play the respective delivery content.

In this way, the same ad content may included in two or more broadcast TV contents in order to increase the size of the target audience. This is helpful in selling ad slots in channels with smaller audiences.

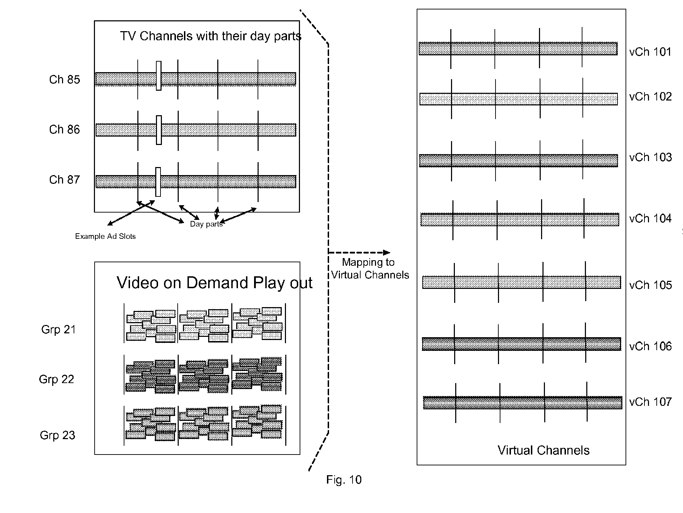

Figure 10 illustrates a further embodiment in which different combinations of audience data for various channels and/or virtual channels may be mapped into (other) virtual channels. For example in the embodiment of figure 4, a standard linear TV channel (Ch85) is split on a demographic basis into two virtual channels (vCh101 and vCh102). The time slots for these two virtual channels can then be sold separately. In the embodiment of figure 9, two standard linear broadcast channels (Ch86 and Ch87) may be combined into a single virtual channel (vCh103), and the combined time slots sold with a larger audience. With reference to the embodiment of figure 6, a group of users (Grp21) may be estimated and mapped into a virtual channel (vCh104). Corresponding user requests can then be identified on a demographic basis so that advertising slots within VOD assets can be filled with targeted ads where the VOD assets are requested during a predetermined time period. Different groups of VOD users (Grp 22 and Grp 23) may be identified on a demographic and VOD content basis to generate further virtual channels (vCh105 and vCh106) in order to provide an accumulated estimated audience for the purpose of selling advertisements. Various other combinations of VOD asset and linear TV asset time slots may be mapped into virtual channels, for example one of the VOD groups (Grp 21) and one of the linear channels (Ch86) may be combined into a single virtual channel (vCh107), again typically based on demographic groupings and program content. The embodiment therefore provides a mechanism for more targeted advertising to improve the cost effectiveness and therefore attractiveness of TV advertising.

Whilst the secondary content has been described largely with respect to advertising content, other types of content could also be included, for example, public health messages.

## Claims

1. A method of delivering video-on-demand content having secondary content delivery slots, the method comprising:
generating (705) an inventory datastructure (500) of secondary content delivery slots within the video-on-demand content, the secondary content delivery slots associated with audience data created by estimating (710) a number of user requests for the video-on-demand content (620) which match a demographic criterion and a time period;
outputting (720) the inventory datastructure;
receiving (725) secondary content (607) associated with respective secondary content delivery slots;
transmitting (730) the video-on-demand content (620) together with the secondary content (607) in the respective secondary content delivery slots in response to receiving a user request matching the demographic criterion and the time period.

2. A method according to claim 2, wherein the inventory datastructure comprises a channel identifier corresponding to the video-on-demand content and a list of the secondary content delivery slots for the video-on-demand content each associated with: a date and a time corresponding to the time period; an estimated audience corresponding to the estimated number of user requests for the VOD content; an expected demographic corresponding to the demographic criterion.

3. A method according to claim 3, wherein for a plurality of video-on-demand content with respective secondary content delivery slots, the inventory datastructure is indexed by one of: channel identifier; date; demographic criterion; video-on-demand content.

4. A method according to any one preceding claim, further comprising:
estimating a number of users of linear broadcasting TV content which match the demographic criterion in order to generate audience data for an secondary content delivery slot within the linear broadcasting TV content;
adding the audience data for the secondary content delivery slots to the inventory datastructure;
receiving secondary content associated with the secondary content delivery slots for the linear broadcasting TV content;
splicing the secondary content into the secondary content delivery slot within the linear broadcasting TV content and transmitting the spliced content to users of the linear broadcasting.

5. A method according to claim 4, wherein the audience data for the linear broadcasting TV content is aggregated with the audience data for the video-on-demand content.

6. A method according to any one preceding claim, further comprising monitoring the number of transmitted secondary content and comparing to the audience data in order to generate an as played report for outputting.

7. A method of delivering linear broadcasting TV content, the method comprising:
estimating (1205) a number of users of first linear broadcasting TV content which match a demographic criterion in order to generate audience data for an secondary content delivery slot within the first linear broadcasting TV content;
estimating (1210) a number of users of second linear broadcasting TV content which match the demographic criterion in order to generate audience data for an secondary content delivery slot within the second linear broadcasting TV content;
outputting (1215, 1220) aggregated audience data for the secondary content delivery slots of the first and second linear broadcasting TV content;
receiving (1225) secondary content associated with the secondary content delivery slots;
splicing (1230) the secondary content into the secondary content delivery slot within the first and second linear broadcasting TV content;
transmitting (1235, 1240) the spliced content to the users of the first and second linear broadcasting TV content respectively.

8. A method according to claim 7, wherein transmitting to the users matching the demographic criterion of the first and second linear broadcasting TV content comprises sending control instructions to user devices of said users to switch to a different channel from other users of the first or second linear broadcasting TV content.

9. A method according to claim 7 or 8, wherein the aggregated audience data is outputted in an inventory datastructure comprises a channel identifier corresponding to the linear broadcasting TV content and a list of the secondary content delivery slots said content each associated with: a date and a time; an estimated audience corresponding to the estimated number of users; an expected demographic corresponding to the demographic criterion.

10. A delivery system for delivering video-on-demand content having secondary content delivery slots, the system comprising:
a processor (657) and memory (657) arranged to generate an inventory datastructure (500) of secondary content delivery slots within the video-on-demand content (620), the secondary content delivery slots associated with audience data created by estimating a number of user requests for the video-on-demand content which match a demographic criterion and a time period;
an interface (660) arranged to output the inventory datastructure;
the interface further arranged to receive secondary content (645) associated with respective secondary content delivery slots;
a transmitter (640) arranged to transmit the video-on-demand content together with the secondary content in the respective secondary content delivery slots in response to receiving a user request matching the demographic criterion and the time period.

11. A linear broadcasting system for delivering linear broadcasting TV content, the system comprising:
a processor (957) and memory (958) arranged to estimate a number of users of first linear broadcasting TV content (920M) which match a demographic criterion in order to generate audience data for an secondary content delivery slot (925M) within the first linear broadcasting TV content;
the processor and memory also arranged to estimate a number of users of second linear broadcasting TV content (920N) which match the demographic criterion in order to generate audience data for an secondary content delivery slot (925N) within the second linear broadcasting TV content;
an interface (960) arranged to output aggregated audience data for the secondary content delivery slots of the first and second linear broadcasting TV content;
the interface arranged to receive secondary content (927) associated with the secondary content delivery slots;
a first delivery system (935M, 940M) for splicing the secondary content into the secondary content delivery slot within the first linear broadcasting TV content and transmitting the spliced content (905M) to the users (910M) of the first linear broadcasting TV content;
a second delivery system (935N, 940N) for splicing the secondary content into the secondary content delivery slot within the second linear broadcasting TV content and transmitting the spliced content (905N) to the users (910N) of the second linear broadcasting TV content.
